Europäisches Patentamt

European Patent Office

Office européen des brevets

(19)

(11) EP 0 860 712 A2

(12) EUROPÄISCHE PATENTANMELDUNG

(43) Veröffentlichungstag:
26.08.1998 Patentblatt 1998/35

(51) Int Cl.⁶: G01S 7/41

(21) Anmeldenummer: 98440012.7

(22) Anmeldetag: 29.01.1998

(84) Benannte Vertragsstaaten:
AT BE CH DE DK ES FI FR GB GR IE IT LI LU MC NL PT SE

(30) Priorität: 20.02.1997 DE 19706576

(71) Anmelder: ALCATEL ALSTHOM COMPAGNIE GENERALE D'ELECTRICITE
75008 Paris (FR)

(72) Erfinder:
• Trompf, Michael, Dr.
71282 Hemmingen (DE)
• Matt, Hans Jürgen, Dr.
71686 Remseck (DE)

(74) Vertreter: Schätzle, Albin, Dipl.-Phys. et al
Alcatel Alsthom
Intellectual Property Department,
Postfach 30 09 29
70449 Stuttgart (DE)

(54) **Vorrichtung und Verfahren zur umgebungsadaptiven Klassifikation von Objekten**

(57)     Zur automatischen Klassifikation von Objekten mittels Doppler-verbreiterter Radarechosignale werden neuronale Netze eingesetzt.

Die Klassifikationsvorrichtung KK enthält ein neuronales Netz (NET, NET2), das eine Eingangsschicht (IL) aus Eingangsknoten (IN1, ..., IN57) für Merkmale (M) der Doppler-verbreiterten Radarechosignale und eine Ausgangsschicht (OL) aus Ausgangsknoten (ON1, ON2, ON3) für vorgegebene Klassen, denen die Objekte zugeordnet werden können, hat. Das neuronale Netz (NET, NET2) ist an die zum Zeitpunkt des Klassifikationsbetriebes vorherrschenden äußeren Bedingungen angepaßt. Die Anpassung geschieht entweder über zusätzliche Eingangsknoten (ZN1, ZN2), an denen Steuerinformationen (SI) eingebbar sind, die eine Adaption des neuronalen Netzes (NET) an einen oder mehrere äußere Einflußfaktoren bewirken, oder über eine Auswahleinrichtung (SEL), die von in einem Speicher (MEM) gespeicherten Parametern (P1, ..., P4) mehrerer, mit Trainingsdaten bei jeweils unterschiedlichen Bedingungen äußerer Einflußfaktoren trainierter neuronale Netze das den herrschenden Bedingungen ähnlichste auswählt.

Fig.1

**Beschreibung**

Die Erfindung betrifft eine Vorrichtung zur automatischen Klassifikation von Objekten mittels Doppler-verbreiterter Radarechosignale unter Verwendung eines neuronalen Netzes.

Im Stand der Technik ist es bekannt, Objekte mittels Doppler-verbreiterter Radarechosignale in Zielklassen zu klassifizieren. Zur Klassifikation werden neuronale Netze eingesetzt. Eine Vorrichtung und ein Verfahren zur automatischen Klassifikation von Objekten, die ein neuronales Netz vom Typ Multi-Layer Perceptron mit einer Eingangsschicht aus Eingangsknoten für Merkmale der Doppler-verbreiterten Radarechosignale, verborgenen Schichten und einer Ausgangsschicht aus Ausgangsknoten nutzt, ist in einem Aufsatz von J. Martinez Madrid et al, ("A Neural Network Approach to Doppler-Based Target Classification", Universidad Politécnica de Madrid, Spanien, Seiten 450 bis 453) beschrieben.

Eine Vorrichtung zur Klassifikation zeitlich veränderlicher Daten, insbesondere zur Klassifikation von Objekten anhand ihrer zeitlichen Radar- oder Sonar-Dopplersignaturen ist in der internationalen Patentanmeldung WO 91/02323 (PCT/US90/04487) beschrieben. Sie ist zur Verarbeitung zweidimensionaler Daten ausgelegt, nämlich von Frequenzbändern und zugehörigen Zeitschlitzen. Zu diesem Zweck weist sie ein neuronales Netz mit mindestens N+1 Eingangsknoten auf mit N als Anzahl der Frequenzbänder und zur Klassifikation werden dem neuronalen Netz jeweils der Wert eines Zeitschlitzes und die dazugehörigen Werte der einzelnen Frequenzbänder an den Eingangsknoten präsentiert.

Ein weiteres Verfahren zur Klassifikation von Objekten ist aus einem Artikel von M. Menon ("An Automatic Ship Classification System for ISAR Imagery", SPIE Vol 2492 1995, Seiten 373 bis 388) bekannt. Dabei werden Schiffe an Hand digitalisierter Videobilder eines ISAR-Radargerätes unter Verwendung eines neuronalen Netzes vom Typ Adaptive Clustering Network in Schiffsklassen eingeteilt. Dem neuronalen Netz werden Merkmalsvektoren verschiedener Videobilder präsentiert.

Die im Stand der Technik bekannten Vorrichtungen und Verfahren zur Klassifikation von Objekten haben den Nachteil, daß die Klassifikationssicherheit von Umgebungseinflüssen abhängt und sie im Falle, daß in der Betriebsphase (Klassifikationsbetrieb) andere Umgebungseinflüsse vorherrschen als bei der Bestimmung der Trainingsdaten, relative hohe Raten von falscher Klassifikation aufweisen.

Aufgabe der Erfindung ist es, eine Vorrichtung und ein Verfahren zur automatischen Klassifikation von Objekten anzugeben, welche eine gegenüber dem Stand der Technik verringerte Abhängigkeit von Umgebungseinflüssen aufweisen.

Die Aufgabe wird hinsichtlich der Vorrichtung gelöst durch die Merkmale des Patentanspruches 1 und die Merkmale des Patentanspruches 10 und hinsichtlich des Verfahrens durch die Merkmale des Patentanspruches 11 und des Patentanspruches 12. Vorteilhafte Ausgestaltungen sind den abhängigen Patentansprüchen zu entnehmen.

Als Vorteil der Erfindung erweist sich, daß eine höhere Klassifikationsrate erreicht wird als im Stand der Technik.

Im folgenden wird die Erfindung anhand von zwei Ausführungsbeispielen und der Figuren 1 bis 4 erläutert. Es zeigen:

Figur 1     ein Blockdiagramm einer erfindungsgemäßen Vorrichtung,

Figur 2     eines schematische Darstellung eines neuronalen Netzes,

Figur 3     ein Flußdiagramm eines erfindungsgemäßen Verfahrens und

Figur 4     eine weitere Vorrichtung in einem Blockdiagramm.

Grundlage der Erfindung ist die Klassifikation von Objekten an Hand von Doppler-verbreiterten Radarechosignalen. Ausgesendete Radarechosignale werden von einem bewegten Objekt, welches zu klassifizieren ist, reflektiert. Durch den Doppler-Effekt ist das reflektierte Radarechosignal gegenüber dem ausgesandten Radarechosignal in der Frequenz verschoben und verbreitert. Während die Frequenzverschiebung charakteristisch ist für die Geschwindigkeit des Objektes in Richtung radial zum Radarsender, ist die spektrale Verbreiterung charakteristisch für innere Bewegungen des Objektes, wie beispielsweise Vibrationen durch ein Antriebsaggregat oder die Rotation eines Propellers oder einer Antriebswelle. Die für ein Objekt charakteristische spektrale Verbreiterung wird als Dopplersignal bezeichnet und stellt als Differenz zwischen reflektiertem und ausgesandtem Radarechosignal bei geeigneter Wahl der Radarsendefrequenz ein akustisches Tonsignal dar. Klassifikation eines Objektes bedeutet in diesem Zusammenhang, daß ein Objekt erkannt und einer bestimmten Klasse aus einer Reihe vorgegebener Klassen von Objekten zugeordnet wird. Die Klassifikation erfolgt unter Verwendung eines neuronalen Netzes.

Ein neuronales Netz besteht aus Knoten und synaptischen Verbindungen zwischen den Knoten. Den synaptischen Verbindungen sind Gewichte zugewiesen, die durch ein Training mit Trainingsdaten bestimmt werden. Die Knoten zeigen eine Aktivierung als Ergebnis von Eingangsdaten. Das neuronale Netz ist in verschiedene hierarchisch angeordnete Schichten unterteilt, wobei jeder Knoten einer unteren Schicht mit jedem Knoten einer oberen Schicht über synaptische Verbindungen verbunden ist. Ein neuronales Netz mit einer solchen Topologie wird als Multi-Layer Perceptron bezeichnet. Die Knoten erhalten als Eingangsdaten die Aktivierung der Knoten der nächst niedrigeren Schicht, multipliziert mit dem Gewicht der jeweiligen synaptischen Verbindung. Demnach ergibt sich die Aktivierung $y_n$ eines Knotens $N_n$ nach einer Formel vom Typ:

$$ y_n = f(\sum_i w_{in} x_i) $$

wobei f() eine vorgegebene Funktion, $x_i$ die Aktivierung des i-ten Knotens $N_i$ und $w_{in}$ das Gewicht der synaptischen Verbindung zwischen dem i-ten Knoten $N_i$ und dem n-ten Knoten $N_n$ ist. Die Eingangsdaten der Knoten der untersten, als Eingangsschicht bezeichneten Schicht, sind Merkmale der Doppler-verbreiterten Radarechosignale und aus der Aktivierung der Knoten der obersten, als Ausgangsschicht bezeichneten Schicht ermittelt sich das Klassifikationsergebnis. Ein Objekt gehört mit der größten Wahrscheinlichkeit der Klasse an, deren Ausgangsknoten die höchste Aktivierung zeigt.

Eine Klassifikation durch das neuronale Netz erfolgt dergestalt, daß aus vergangenen gespeicherten Klassifikationsergebnissen auf zukünftige geschlossen wird. Dazu ist das Netz mit Trainingsdaten von verschiedenen Objekten aller Klassen trainiert. Dabei wurden dem neuronalen Netz die Trainingsdaten sooft präsentiert, bis das Netz durch Variation der Gewichte der synaptischen Verbindungen gelernt hatte, alle Trainingsdaten richtig zuzuordnen. Das Training erfolgt nach einen Algorithmus, wie beispielsweise dem Error-Backpropagation Algorithmus, der in dem Aufsatz von J. Martinez Madrid et al, (,,A Neural Network Approach to Doppler-Based Target Classification", Universidad Politécnica de Madrid, Spanien, Seiten 450 bis 453) beschrieben ist. Bei dem Training wurden alle Ausgangsknoten für sich trainiert, d.h. daß dem neuronalen Netz für jede Klasse Trainingsdaten von Objekten, die der jeweiligen Klasse angehören, antrainiert wurden, bis das Netz alle Trainingsdaten sicher der richtigen Klasse zuordnen konnte. Die durch das Training einmalig bestimmten Gewichte der synaptischen Verbindungen können im Anschluß an das Training ausgelesen werden um die Topologie des Netzes in beliebiger Stückzahl zu reproduzieren. Dadurch muß also nicht jede einzelne Vorrichtung trainiert werden.

Eine weitere Möglichkeit für das Training ist, den in "The Cascade-Correlation Learning Architecture", Scott I. Fahlman und Christian Lebiere, August 29 1991, School of Computer Science Carnegie Mellon University Pittsburg, PA 15213 beschriebenen Algorithmus für kaskadenkorrelierte Netze zu verwenden. Nach dieser Methode wird das neuronale Netz während des Trainings erzeugt, d.h. daß durch das Training sowohl die Gewichte der synaptischen Verbindungen wie auch die Topologie des Netzes festgelegt werden.

Durch das Training und damit vor allem durch die verwendeten Trainingsdaten werden die Gewichte der synaptischen Verbindungen bestimmt. Nun hängen aber Doppler-verbreiterte Radarechosignale nicht nur von dem Objekt ab, von dem diese reflektiert wurden, sondern auch von äußeren Einflußfaktoren. Solche äußeren Einflußfaktoren sind beispielsweise Umgebungseinflüsse wie

- Witterung, Niederschlag, Nebel, Luftfeuchtigkeit,
- Vegetation und deren Bewegung durch Winde,
- Flächennutzung und
- Seegang

und operative Einflüsse wie

- der Standort, der Beobachtungswinkel (Elevation und Azimut),
- die Beobachtungszeit (Mittelungsdauer),
- die Entfernung des zu klassifizierenden Objektes und dessen Bewegungsparameter (Richtung, Winkel, Richtungs- und Winkeländerung, Geschwindigkeit).

Da es kaum möglich ist, das neuronale Netz mit Trainingsdaten bei allen möglichen Umgebungsbedingungen und allen möglichen Kombinationen verschiedener Einflußfaktoren mit unterschiedlichen Bedingungen zu trainieren, besteht ein Grundgedanke der Erfindung darin, zur Klassifikation ein neuronales Netz einzusetzen, welches an die zum Zeitpunkt der Bestimmung der Doppler-verschobenen Radarechosignale vorherrschenden Bedingungen angepaßt ist.

Ein Aspekt der Erfindung ist, eine Adaption des neuronalen Netzes über Steuerinformationen vorzunehmen, die an zusätzlichen Eingangsknoten des neuronalen Netzes eingegeben werden und eine Anpassung des neuronalen Netzes an einen oder mehrere äußere Einflußfaktoren bewirken. Das neuronale Netz wurde in der Trainingsphase mit Trainingsdaten trainiert, die neben Merkmalen Doppler-verbreiterter Radarechosignale auch zusätzliche Steuerinformationen über zugehörige Umgebungseinflüsse, d.h. die äußeren Bedingungen vorgegebener Einflußfaktoren enthalten.

Ein anderer Aspekt der Erfindung ist, in der Vorrichtung einen Speicher vorzusehen, der Parameter mehrerer neuronaler Netze enthält. Die mehreren neuronalen Netze sind mit Trainingsdaten bei jeweils unterschiedlichen äußeren Bedingungen trainiert. Für eine Klassifikation wird das neuronale Netz eingesetzt, welches mit Trainingsdaten bei den äußeren Bedingungen trainiert ist, die den äußeren Bedingungen zum Zeitpunkt des Empfangs der Doppler-verbreiterten Radarechosignale am ähnlichsten sind. Bei den Parametern kann es sich beispielsweise um die Gewichte der synaptischen Verbindungen handeln, die in mehreren Trainingsphasen mit Trainingsdaten bei unterschiedlichen äußeren Bedingungen erhalten wurden.

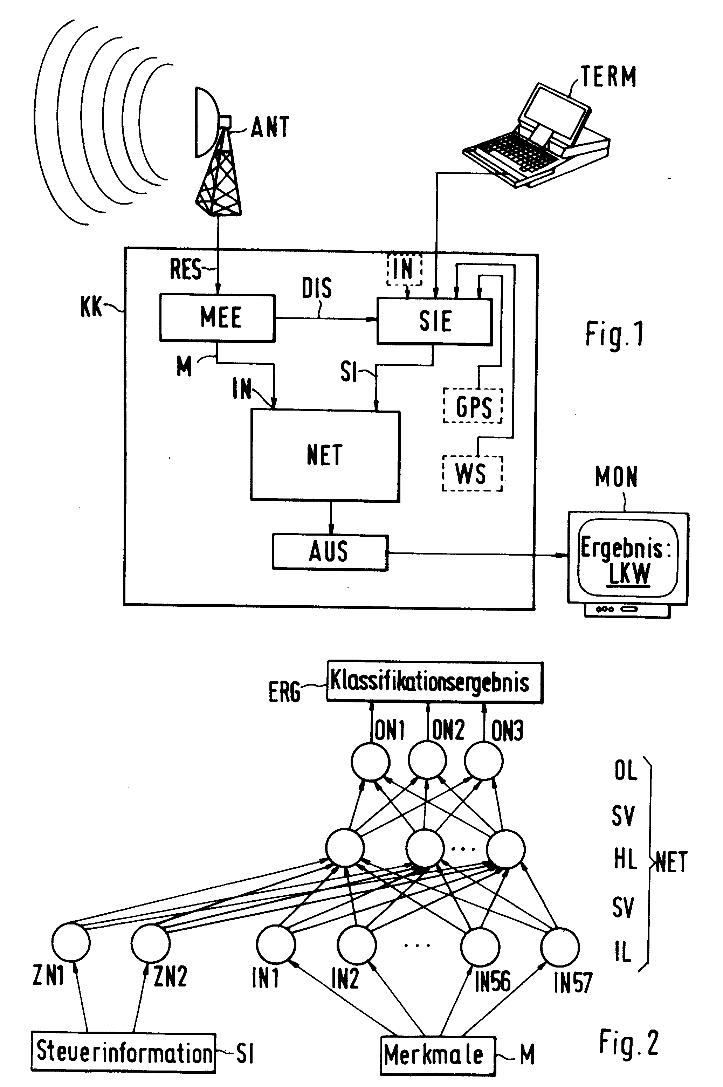

Ein erstes Ausführungsbeispiel einer erfindungsgemäßen Klassifikationsvorrichtung KK ist in einem Blockschaltbild in Figur 1 gezeigt. Sie enthält eine Merkmalsextraktionseinrichtung MME, deren Eingang mit einer Radarantenne ANT verbunden ist. Die Radarantenne sendet kurze Radarpulse aus und empfängt die von einem zu klassifizierenden Objekt reflektierten Radarechosignale RSE. Die Merkmalsextraktionseinrichtung MME leitet aus den Radarechosignalen RSE Merkmale M ab und präsentiert diese Merkmale M einem neuronalen Netz NET an dessen Eingängen IN. Das neuronale Netz weist zusätzliche Eingänge ZN auf, die mit dem Ausgang einer Steuereinrichtung SIE verbunden sind. Die Steuereinrichtung SIE erzeugt Steuerinformationen SI, die eine Adaption des neuronalen Netzes NET an mindestens einen äußeren Einflußfaktor bewirken.

In dem ersten Ausführungsbeispiel besteht eine gestrichelt gezeichnete Verbindung DIS zwischen der Merkmalsextraktionseinrichtung MME und der Steuereinrichtung SIE, über die die Merkmalsextraktionseinrichtung MME der Steuereinrichtung mitteilt, aus welcher Entfernung das Radarechosignal RES reflektiert wurde. Diese Information wird von der Merkmalsextraktionseinrichtung aus der Laufzeit des Radarpulses ermittelt. Die Entfernung stellt einen ersten äußeren Einflußfaktor dar, an den das neuronale Netz NET mittels einer ersten Steuerinformation SI von der Steuereinrichtung SIE adaptiert wird.

Ein zweiter äußerer Einflußfaktor ist über ein mit der Steuereinrichtung SIE verbundenes Terminal TERM von einem Benutzer eingebbar. Im ersten Ausführungsbeispiel wird von einem Benutzer der Beobachtungswinkel der Radarantenne ANT eingegeben. Der Beobachtungswinkel bezeichnet den Azimutalwinkel, unter dem die Radarantenne ANT einen Beobachtungsabschnitt überwacht. Z.B. kann die Radarantenne ANT auf einer Erhebung, einem Berg oder einem Felsen installiert sein und eine tiefer gelegene Ebene überwachen. Der Benutzer hat in diesem Fall die relative Höhe über der Ebene anzugeben (Elevation) und der Azimutalwinkel kann dann von der Steuereinrichtung SIE aus der relativen Höhe und der Entfernung zu einem Beobachtungsabschnitt berechnet werden. Aus diesen Angaben generiert die Steuerungseinrichtung SIE eine zweite Steuerinformation und leitet diese an einen zusätzlichen Eingang des neuronalen Netzes NET weiter.

Die Ausgänge des neuronalen Netzes NET sind mit einer Auswerteeinrichtung AUS verbunden, die die Aktivierung der Ausgangsknoten des neuronalen Netzes NET auswertet, die Klasse, der ein zu klassifizierendes Objekt zuzuordnen ist, bestimmt und das Ergebnis zur Weiterbehandlung weiterleitet, beispielsweise an eine Ausgabeeinheit MON. Im ersten Ausführungsbeispiel handelt es sich bei der Ausgabeeinheit MON um einen Monitor, auf dem das Klassifikationsergebnis angezeigt wird. Die Klassifikationsvorrichtung KK des ersten Ausführungsbeispieles ist für die Einteilung von Kraftfahrzeugen in die Klassen Personenkraftwagen (PKW) und Lastkraftwagen (LKW) vorgesehen, beispielsweise zur Verkehrsüberwachung und hat im abgebildeten Zustand gerade einen LKW erkannt.

Bei einer Weiterbildung der Erfindung ist in die Klassifikationsvorrichtung KK ein GPS-Empfänger GPS integriert (Global Positioning System). Über diesen kann die genaue Position der Klassifikationsvorrichtung KK mittels einer Satellitenpeilung ermittelt und die Elevation und der Beobachtungswinkel bestimmt werden. Die im ersten Ausführungsbeispiel notwendige Benutzereingabe über ein Terminal TERM kann somit entfallen. Vorteile ergeben sich hierdurch insbesondere bei häufigem Standortwechsel portabler Anlagen.

In einer weiteren vorteilhaften Ausführung der Erfindung ist in die Klassifikationsvorrichtung KK eine Wetterstation WS integriert, die beispielsweise Windstärke, Luftfeuchtigkeit, Nebel und Niederschlag messen und an die Steuerungseinrichtung SIE weiterleiten kann. Diese generiert daraus weitere Steuerungsinformationen SI für das neuronale Netz NET. Durch die Anpassung des neuronalen Netzes an weitere äußere Einflußfaktoren wird die Klassifikationssicherheit und die Klassifikationsrate der Klassifikationsvorrichtung KK erhöht.

Besonders bevorzugt ist auch eine Ausführung der Erfindung, bei der die Klassifikationsvorrichtung KK eine Schnittstelleneinrichtung IN aufweist. Über diese Schnittstelleneinrichtung IN kann die Steuerungseinrichtung SIE mit weiteren Informationen über äußere Einflußfaktoren versorgt werden, beispielsweise über Witterungsbedingungen oder Seegang. Die Schnittstelleneinrichtung IN kann eine Luftschnittstelle für eine Funkübertragung oder auch eine Leitungsschnittstelle umfassen und mit einer entfernten Infomationsquelle wie beispielsweise dem Seewetteramt oder einer entfernten Wetterstation verbunden sein.

Die Schnittstelleneinrichtung IN eignet sich besonders zur Eingabe von Umgebungseinflüssen, wie Witterung, Niederschlag, Nebel, Luftfeuchtigkeit, Vegetation (Bewaldung) und deren Bewegung durch Winde, Flächen nutzung und Seegang. Operative Einflüsse wie der Standort, der Beobachtungswinkel (Elevation und Azimut), die Beobachtungszeit (Mittelungsdauer), die Entfernung des zu klassifizierenden Objektes und dessen Bewegungsparameter (Richtung, Winkel, Richtungs- und Winkeländerung, Geschwindigkeit), können hingegen in der Klassifikationsvorrichtung KK bestimmt werden. Beispielsweise ist die Mittelungsdauer aus der Betriebsart der Vorrichtung bekannt, Geschwindigkeit und Entfernung eines Objektes können aus den reflektierten Doppler-verbreiterten Radarechosignalen bestimmt werden und der Standort kann durch den vorstehend beschriebenen GPS-Empfänger ermittelt werden.

Neben den beiden im ersten Ausführungsbeispiel verwendeten äußeren Einflußfaktoren Entfernung und Beobachtungswinkel ist eine Anpassung des neuronalen Netzes an weitere äußere Einflußfaktoren über weitere zusätzliche Eingangsknoten vorteilhaft und führt je nach Einsatzart der Klassifikationsvorrichtung zu besseren Klassifikationsergebnissen.

Figur 2 zeigt das neuronale Netz NET des ersten Ausführungsbeispieles. Dabei besteht das neuronale Netz NET aus einer Eingangsschicht IL aus 57 Eingangsknoten IN1, ..., IN57 für die Merkmale M der Doppler-verbreiteten Radarechosignale, einer Zwischenschicht HL aus 30 Knoten, einer Ausgangsschicht OL aus drei Ausgangsknoten ON1, ON2, ON3 für die Klassen LKW, PKW und Fahrräder, denen Objekte zugeordnet werden können, sowie aus zwei zusätzlichen, der Eingangsschicht IL zugehörigen Eingangsknoten ZN1, ZN2 für die Steuerinformationen SI. Jeder Knoten einer unteren Schicht ist mit jedem Knoten einer oberen Schicht über synaptische Verbindungen SV verbunden. Findet eine Klassifikation statt, so bedeutet das, daß ein Objekt anhand eines Doppler-verbreiteten Radarechosignales erkannt und einer der drei Klassen LKW, PKW oder Fahrräder zugeordnet wurde. Die Zuordnung erfolgt zu der Klasse des Ausgangsknotens mit der höchsten Aktivierung.

Den beiden zusätzlichen Eingangsknoten ZN1, ZN2 werden die von der Steuerungseinrichtung SIE generierten Steuerinformationen SI präsentiert. Über die synaptischen Verbindungen SV wirken die beiden zusätzlichen Eingangsknoten ZN1, ZN2 auf die Aktivierungen aller Knoten der Zwischenschicht HL und damit indirekt auf die Aktivierungen der drei Ausgangsknoten ON1, ON2, ON3. Sie bestimmen somit das Klassifikationsergebnis ERG, das ja aus den Aktivierungen der Ausgangsknoten bestimmt wird, mit. Die Gewichte der einzelnen synaptischen Verbindungen SV wurden in einem Training bestimmt und sind nach Abschluß des Trainings vorteilhafterweise nicht mehr veränderlich. Wären die Gewichte auch im Betrieb noch veränderlich, so müßte das neuronale Netz NET im Betrieb ständig überwacht werden und es bestünde die Gefahr, daß durch mangelnde Einwirkung eines Benutzers auf den fortschreitenden Lernprozeß des neuronalen Netzes NET falsche Erkennungsmuster erlernt werden.

Um eine gute Anpassung an äußere Einflußfaktoren zu erreichen, ist das neuronale Netz NET mit Testdaten bei verschiedenen äußeren Bedingungen trainiert worden, wobei dem neuronalen Netz NET in dieser Trainingsphase ebenfalls die Steuerinformationen SI zu den Trainingsdaten präsentiert wurden. Dabei ist es jedoch nicht notwendig, Trainingsdaten bei allen möglichen äußeren Bedingungen und Kombinationen äußerer Einflußfaktoren zu trainieren. Vielmehr reicht es aus, dem neuronalen Netz NET wenige ausgesuchte Werte zu den verschiedenen äußeren Einflußfaktoren, sogenannte Stützpunkte, anzutrainieren. Das bedeutet beispielsweise für den äußeren Einflußfaktor Luftfeuchtigkeit, daß nicht Trainingsdaten bei jeder möglichen Luftfeuchtigkeit benötigt werden, sondern es reicht aus, dem neuronalen Netz NET Trainingsdaten bei 0%, 50% und 100% anzutrainieren. Den Einfluß dazwischen gelegener Werte kann das neuronale Netz NET interpolieren.

Die für das Training benötigten Trainingsdaten können entweder bei unterschiedlichen zu trainierenden äußeren Bedingungen bestimmt worden sein, oder der Einfluß bestimmter äußerer Einflußfaktoren auf Doppler-verbreitete Radarechosignale kann unter Anwendung von Modellen simuliert werden. Dies ist vor allem für Einflußgrößen wie Entfernung, Luftfeuchtigkeit oder Niederschlag, die vor allem Einfluß auf die Dämpfung des Signals haben, einfach zu realisieren. Der besondere Vorteil dieser Ausführungsform der Erfindung besteht also darin, daß das neuronale Netz nicht mit Trainingsdaten bei allen möglichen äußeren Bedingungen oder Kombinationen verschiedener äußerer Einflußfaktoren trainiert sein muß, sondern daß nur einige wenige Stützpunkte dem neuronalen Netz antrainiert werden müssen, wobei der Einfluß von äußeren Einflußfaktoren auch simuliert werden kann. Es wird dabei die Eigenschaft neuronaler Netze ausgenutzt, zwischen solchen Stützpunkten interpolieren zu können.

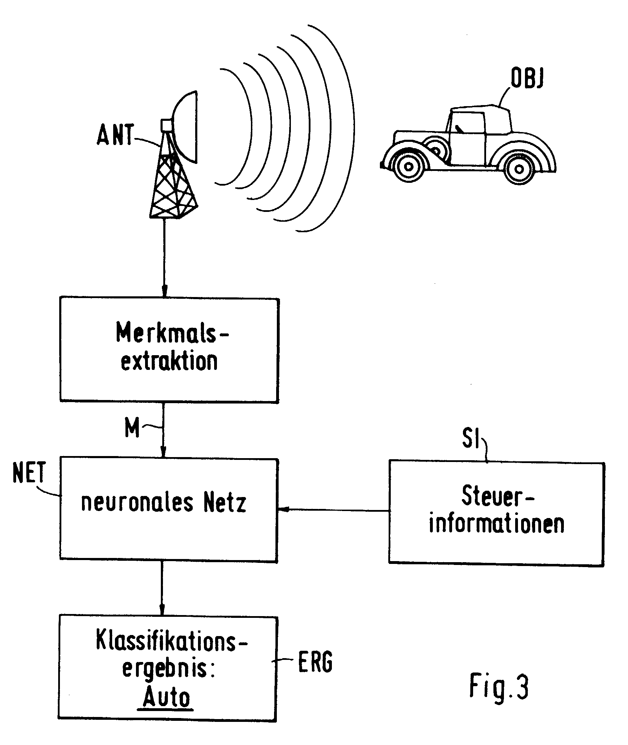

Der Ablauf einer Klassifikation verläuft in dem Ausführungsbeispiel nach dem in Figur 3 dargestellten Verfahren. Zunächst wird eine Radarmessung durchgeführt. Dazu wird von der Radarantenne ANT eine Pulsfolge kurzer Radarsignale mit einer Pulsfolgefrequenz von beispielsweise 4 kHz und einer Sendefrequenz beispielsweise im Bereich von 10 GHz ausgesendet und nach einer gewissen Zeitspanne (Laufzeit) wird ein reflektiertes Doppler-verbreitetes Radarechosignal von der Radarantenne ANT empfangen. Durch die Bauart der Radarantenne ist ein Winkelbereich festgelegt, aus dem das reflektierte Radarsignal empfangen werden kann.

Nun folgt die Merkmalsextraktion: Das empfangene Doppler-verbreitete Radarechosignal wird durch eine Demodulation von der Trägerfrequenz des ausgesandten Radarsignales befreit. Hierdurch wird ein als Videosignal bezeichnetes Zeitspektrum mit einer Pulsperiode, die der Pulsfolgefrequenz der ausgesandten Radarsignale entspricht, erhalten. Das Videosignal wird innerhalb jeder Pulsperiode in eine Anzahl Zeitfenster zerlegt, die je nach Laufzeit für eine bestimmte mittlere Entfernung repräsentativ sind. Die Anzahl der Zeitfenster entspricht einer Entfernungsauflösung und hängt von der Pulsdauer der ausgesendeten Radarsignale ab.

Für jedes Zeitfenster wird eine Folge von Werten gebildet, die in aufeinanderfolgenden Pulsperioden zum gleichen Abtastzeitpunkt als mittlerer Abtastwert erhalten werden. Die Folge stellt ein mit der Pulsfolgefrequenz der ausgesandten Radarsignale abgetastetes akustisches Tonsignal dar und wird als Dopplersignal bezeichnet. Die Anzahl an Signalwerten des Dopplersignales hängt von der Beobachtungsdauer ab und beträgt im Ausführungsbeispiel 256. Der Frequenzbereich des Dopplersignales ist durch die Sendefrequenz der Radarsignale bestimmt und dieser proportional. In dem Ausführungsbeispiel beträgt der Frequenzbereich etwa 0 bis 2 kHz. Durch den Winkelbereich der Radarantenne ANT und die mittlere Entfernung der entsprechenden Zeitfenster ist ein vorgegebener Beobachtungsraum in Beobachtungsabschnitte unterteilt und für jeden Beobachtungsabschnitt wird ein Dopplersignal erhalten, indem die Radarantenne ANT rotiert.

Die 256 Signalwerte eines Dopplersignales werden mit Hilfe einer diskreten Fouriertransformation, beispielsweise der FFT (Fast Fourier Transformation), in den Frequenzbereich abgebildet. Die Darstellung erfolgt durch 256 Betragskoeffizienten. Da das transformierte Spektrum symmetrisch ist, brauchen nur die Hälfte einschließlich der Nullstelle, d.h. 129 Betragskoeffizienten betrachtet zu werden. Diese werden quadriert, logarithmiert und anschließend mit Hilfe einer Fourierrücktransformation auf 128 Koeffizienten abgebildet. Eine solche Darstellung wird als Cepstrum bezeichnet und die Koeffizienten heißen Cepstralkoeffizienten. Die Darstellung des Dopplersigales als Cepstrum ist vorteilhaft, da mit dieser Darstellung eine besonders sichere Klassifikation unter Verwendung eines neuronalen Netzes möglich ist.

Die ersten 57 Cepstralkoeffizienten werden nun dem neuronalen Netz an den 57 Eingangsknoten IN1, ... IN57 als Eingangsdaten präsentiert. In dem ersten Ausführungsbeispiel werden die Cepstralkoeffizienten 58 bis 128 nicht weiter betrachtet, da zur sicheren Klassifikation 57 Koeffizienten ausreichen. Für die Erkennung und Klassifikation anderer Objekte, beispielsweise Flugzeuge oder Schiffe, kann es jedoch sinnvoll sein, eine größere Zahl von Cepstralkoeffizienten zu betrachten.

Auch die Steuerinformationen SI, die von der Steuereinrichtung SIE generiert werden, werden dem neuronalen Netz NET präsentiert, und zwar an den dafür vorgesehenen zusätzlichen Eingangsknoten ZN1, ZN2. In dem ersten Ausführungsbeispiel wird dem neuronalen Netz NET die erste Steuerinformation für die Entfernung, aus der das Doppler-verbreiterte Radarechosignal reflektiert wurde, an dem ersten zusätzlichen Eingangsknoten ZN1 präsentiert und die zweite Steuerinformation für den Beobachtungswinkel der Radarantenne ANT an dem zweiten zusätzlichen Eingangsknoten ZN2. Die Ausgangsknoten weisen als Reaktion auf die Eingangsdaten Aktivierungen auf, aus denen die Klasse bestimmt wird, dem das zu klassifizierende Objekt OBJ zuzuordnen ist. Im vorliegenden Fall weist der zweite Ausgangsknoten ON2, der für Personenkraftwagen (PKW) trainiert wurde, die höchste Aktivierung auf und das Objekt OBJ wird als PKW erkannt und klassifiziert (Klassifikationsergebnis ERG).

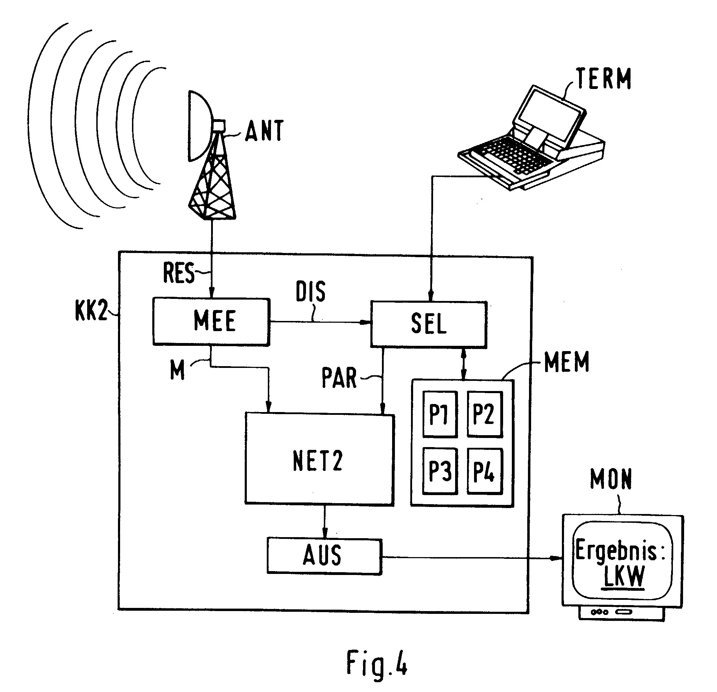

Eine andere erfindungsgemäße Klassifikationsvorrichtung KK2, die zur Klassifikation ebenfalls ein an äußere Bedingungen angepaßtes neuronales Netz NET2 verwendet, ist Inhalt eines zweiten in Figur 4 als Blockdiagramm gezeigten Ausführungsbeispieles. Gleiche Elemente sind dabei mit gleichen Bezugszeichen versehen wie in Figur 1.

Die Klassifikationsvorrichtung KK2 des zweiten Ausführungsbeispieles enthält:

- die an eine Radarantenne ANT angeschlossenen Merkma lsextraktionsvorrichtung MME,
- das neuronale Netz NET2, welches die gleiche Topologie aufweist, wie das neuronale Netz NET des ersten Ausführungsbeispieles,
- die mit dem Monitor MON verbundene Auswerteeinrichtung AUS,
- eine Auswahleinrichtung SEL und
- einen Speicher MEM.

In dem Speicher MEM sind Parameter mehrerer neuronaler Netze abgelegt. Es handelt sich dabei um vier Sätze von Parametern P1-P4, die zu vier neuronalen Netzen gehören, welche sich darin unterscheiden, daß sie mit Trainingsdaten bei unterschiedlichen äußeren Bedingungen trainiert sind. Die Sätze von Parametern enthalten die Gewichte der einzelnen synaptischen Verbindungen SV für das neuronale Netz NET2. Die Parameter sind erzeugt, indem das neuronale Netz NET2 mit vier Sätzen von Trainingsdaten trainiert wurde, die Doppler-verbreiterte Radarechosignale bei unterschiedlichen Bedingungen äußerer Einflußfaktoren enthalten.

In dem zweiten Ausführungsbeispiel sind dies die selben beiden Einflußfaktoren wie im ersten Ausführungsbeispiel: Die Entfernung eines Objektes und der Beobachtungswinkel. Die Sätze von Trainingsdaten enthalten Trainingsdaten bei den möglichen Kombinationen folgender äußerer Bedingungen:

- Entfernung des Objektes ≤ 1 km
- Entfernung des Objektes > 1 km
- Beobachtungswinkel liegt im Intervall von +2 Grad bis -2 Grad von der Horizontalen
- Beobachtungswinkel liegt außerhalb dieses Intervalls.

Die Auswahleinrichtung berücksichtigt die zum Zeitpunkt des Klassifikationsbetriebes herrschenden äußeren Bedingungen, die sie über die Verbindung DIS von der Merkmalsextraktionseinrichtung MME (Entfernung des Objektes) sowie von dem Terminal TERM (Elevation) erhält, und wählt anhand dieser Informationen aus dem Speicher MEM den Parametersatz mit den ähnlichsten äußeren Bedingungen aus. Die einzelnen Gewichte, die der ausgewählte Parametersatz enthält werden als neue Gewichte der synaptischen Verbindungen SV in das neuronale Netz NET2 geladen. Mit diesen neuen Gewichten wird eine Klassifikation durchgeführt, deren Ergebnis auf dem Monitor MON angezeigt wird.

In dem Speicher MEM können anstelle der Sätze von Parametern P1-P4 auch die ganzen Topologien verschiedener neuronaler Netze gespeichert sein. Dies ist insbesondere dann notwendig, wenn zur Klassifikation anstelle eines Multi-Layer Perceptron Netzes wie in den Ausführungsbeispielen ein neuronales Netz vom Typ der Eingangs beschriebenen kaskadenkorrelierten Netze verwendet wird, deren Topologie erst durch das Training bestimmt wird.

Auch bei dieser zweiten Ausführungsform bestehen vorteilhafte Weiterbildungen der Erfindung darin, in die Klassifikationsvorrichtung KK2 ein GPS-Empfänger oder eine Wetterstation zu integrieren, oder eine Schnittstelleneinrichtung zum Empfangen von Informationen über äußere Bedingungen von einer entfernten Informationsquelle vorzusehen.

Die zwei in den beiden Ausführungsbeispielen beschriebenen alternativen Ausführungsformen können auch vorteilhaft kombiniert werden.

In den beiden Ausführungsbeispielen besteht das neuronale Netz aus drei Schichten, wobei jeweils zwischen der Eingangsschicht und der Ausgangsschicht eine verborgene Schicht angeordnet ist. Denkbar ist auch der Einsatz von zwei oder mehr verborgenen Schichten. Allerdings steigt dabei der Rechenaufwand, der nötig ist, um die Aktivierung der einzelnen Knoten der Schichten zu berechnen, ohne daß mit einer Topologie mit mehr als einer verborgenen Schicht wesentlich bessere Klassifikationsergebnisse erzielt werden. Der Einsatz eines neuronalen Netzes mit drei Schichten ist daher bevorzugt.

In der erfindungsgemäßen Vorrichtung kann das neuronale Netz durch parallel arbeitende, vernetzte Mikroprozessoren ausgeführt sein. Alternativ ist aber auch eine Ausführung mit nur einem Mikroprozessor möglich, der die einzelnen Knoten des neuronalen Netzes sequentiell abarbeitet. Das neuronale Netz ist in diesem Fall durch ein in einem Speicher gespeichertes Programmodul realisiert.

**Patentansprüche**

1.  Vorrichtung zur automatischen Klassifikation von Objekten mittels Doppler-verbreiterter Radarechosignale, welche ein neuronales Netz (NET) mit einer Eingangsschicht (IL) aus Eingangsknoten (IN1, ..., IN57) für Merkmale (M) der Doppler-verbreiterten Radarechosignale und einer Ausgangsschicht (OL) aus Ausgangsknoten (ON1, ON2, ON3) für vorgegebene Klassen, denen die Objekte zugeordnet werden können, aufweist,
    **dadurch gekennzeichnet,**daß
    das neuronale Netz (NET) über mindestens einen zusätzlichen Eingangsknoten (ZN 1, ZN2) verfügt, an dem Steuerinformationen (SI) eingebbar sind, die eine Adaption des neuronalen Netzes (NET) an einen oder mehrere äußere Einflußfaktoren bewirken.

2.  Vorrichtung gemäß Anspruch 1, bei der an den zusätzlichen Eingangsknoten (ZN1,ZN2) des neuronalen Netzes (NET) Informationen über den Standort und/oder Beobachtungswinkel des Radarempfängers, von dem die Doppler-verbreiterten Radarechosignale empfangen werden, eingebbar sind.

3.  Vorrichtung gemäß Anspruch 1, bei der an den zusätzlichen Eingangsknoten (ZN1,ZN2) des neuronalen Netzes (NET) Informationen über Witterungsbedingungen zu dem Zeitpunkt des Empfangs der Doppler-verbreiterten Radarechosignale eingebbar sind.

4.  Vorrichtung gemäß Anspruch 1, bei der an den zusätzlichen Eingangsknoten (ZN1,ZN2) des neuronalen Netzes (NET) Informationen über die Entfernung eines zu klassifizierenden Objektes von dem Radarempfänger, von dem die Doppler-verbreiterten Radarechosignale empfangen werden, eingebbar sind.

5.  Vorrichtung gemäß Anspruch 1, bei der das neuronale Netz (NET) in einer Trainingsphase mit einer Anzahl Trainingsdaten trainiert ist und die Trainingsdaten neben Merkmalen (M) Doppler-verbreiterter Radarechosignale auch zusätzliche Steuerinformationen (SI) über zugehörige Umgebungseinflüsse enthalten.

6.  Vorrichtung gemäß Anspruch 1 mit einer Schnittstelleneinrichtung (IN) zum Empfang von Informationen über äußere Einflüsse von einer räumlich getrennten Informationsquelle.

7.  Vorrichtung gemäß Anspruch 1, bei der eine Eingabevorrichtung (TERM) zur Eingabe von Informationen über äußere Einflußfaktoren von einem Benutzer vorgesehen ist.

8.  Vorrichtung gemäß Anspruch 2 mit einem GPS-Empfänger (Global Positioning System) zur Erfassung von Informationen über den Standort und/oder Beobachtungswinkel des Radarempfängers, von dem die Doppler-verbreiterten Radarechosignale empfangen werden

9.  Vorrichtung gemäß Anspruch 3 mit einer Wetterstation zur Erfassung von Informationen über Witterungsbedingungen zu dem Zeitpunkt des Empfangs der Doppler-verbreiterten Radarechosignale.

10. Vorrichtung zur automatischen Klassifikation von Objekten mittels Doppler-verbreiterter Radarechosignale, welche ein neuronales Netz (NET) mit einer Eingangsschicht (IL) aus Eingangsknoten (IN1, ..., IN57) für Merkmale (M) der Doppler-verbreiterten Radarechosignale und einer Ausgangsschicht (OL) aus Ausgangsknoten (ON1, ON2, ON3) für vorgegebene Klassen, denen die Objekte zugeordnet werden können, aufweist,
    **gekennzeichnet durch**

    - einen Speicher (MEM), in dem Parameter mehrerer, mit Trainingsdaten bei jeweils unterschiedlichen Bedingungen äußerer Einflußfaktoren trainierte neuronale Netze gespeichert sind und

- einer Auswahleinrichtung (SEL) welche in Abhängigkeit äußerer Einflußfaktoren die Parameter des neuronalen Netzes auswählt, das mit Trainingsdaten bei Bedingungen äußerer Einflußfaktoren trainiert ist, die den äußeren Bedingungen zu dem Zeitpunkt des Empfangs der Doppler-verbreiterten Radarechosignale am ähnlichsten sind.

11. Verfahren zur automatischen Klassifikation von Objekten mittels Doppler-verbreiterter Radarechosignale, bei dem

- zur Klassifikation ein neuronales Netz (NET) mit Ausgangsknoten (ON1, ON2, ON3) für vorgegebene Klassen, denen die Objekte zugeordnet werden können, verwendet wird,
- aus den Doppler-verbreiterten Radarechosignalen Merkmale (M) bestimmt und dem neuronale Netz (NET) an Eingangsknoten (IN1, ..., IN57) einer Eingangsschicht (IL) präsentiert werden und
- die Ausgangsknoten (ON1, ON2, ON3) als Antwort auf die dem neuronalen Netz (NET) präsentierten Merkmale (M) eine Aktivierung zeigen, aus der die Klasse bestimmt wird, der das zu klassifizierende Objekt zuzuordnen ist,

**dadurch gekennzeichnet,** daß
eine Adaption des neuronalen Netzes (NET) an mindestens einen äußeren Einflußfaktor durchgeführt wird, indem aus dem mindestens einen äußeren Einflußfaktor eine Steuerinformation (SI) bestimmt wird, die dem neuronalen Netz (NET) an mindestens einem zusätzlichen Eingangsknoten (ZN1,ZN2) eingegeben wird.

12. Verfahren zur automatischen Klassifikation von Objekten mittels Doppler-verbreiterter Radarechosignale, bei dem

- zur Klassifikation ein neuronales Netz (NET2) mit Ausgangsknoten (ON1, ON2, ON3) für vorgegebene Klassen, denen die Objekte zugeordnet werden können, verwendet wird,
- aus den Doppler-verbreiterten Radarechosignalen Merkmale (M) bestimmt und dem neuronale Netz (NET2) an Eingangsknoten (IN1, ..., IN57) einer Eingangsschicht (IL) präsentiert werden und
- die Ausgangsknoten (ON1, ON2, ON3) als Antwort auf die dem neuronalen Netz (NET2) präsentierten Merkmale (M) eine Aktivierung zeigen, aus der die Klasse bestimmt wird, der das zu klassifizierende Objekt zuzuordnen ist,

**dadurch gekennzeichnet,** daß
eine Adaption des neuronalen Netzes (NET) an mindestens einen äußeren Einflußfaktor durchgeführt wird, indem aus einem Speicher (MEM), der Parameter (P1, ..., P4) mehrerer, mit Trainingsdaten bei jeweils unterschiedlichen Bedingungen äußerer Einflußfaktoren trainierter neuronaler Netze enthält, die Parameter des neuronalen Netzes ausgewählt werden, das mit Trainingsdaten bei Bedingungen äußerer Einflußfaktoren trainiert ist, die den Bedingungen zu dem Zeitpunkt des Empfangs der Doppler-verbreiterten Radarechosignale am ähnlichsten sind.

EP 0 860 712 A2

Fig.1

Fig.2

9

OBJ

ANT

Merkmalsextraktion

M

NET   neuronales Netz

SI

Steuerinformationen

Klassifikationsergebnis:
Auto

ERG

Fig.3

Fig.4